Europäisches Patentamt

European Patent Office

Office européen des brevets

(11) Publication number: **0 212 804**
**A2**

# (12) EUROPEAN PATENT APPLICATION

(21) Application number: **86304888.0**

(22) Date of filing: **25.06.86**

(51) Int. Cl.⁴ **G01M 11/00**

(30) Priority: **19.08.85 US 767217**

(43) Date of publication of application:
**04.03.87 Bulletin 87/10**

(84) Designated Contracting States:
**DE FR GB**

(71) Applicant: **TEKTRONIX, INC.**
**Tektronix Industrial Park D/S Y3-121 4900**
**S.W. Griffith Drive P.O. Box 500**
**Beaverton Oregon 97077(US)**

(72) Inventor: **Trent, William A.**
**2743 N.W. Scandia Loop**
**Bend Oregon 97701(US)**
Inventor: **Bateman, Glenn**
**3711 S.W. 63rd**
**Redmond Oregon 97756(US)**

(74) Representative: **Wombwell, Francis et al**
**Potts, Kerr & Co. 15, Hamilton Square**
**Birkenhead Merseyside L41 6BR(GB)**

(54) **Multiple wavelength optical fiber measurement system.**

(57) A transmission device for testing the propagation characteristics of an optical fiber comprises at least two narrow-band optical sources. The optical sources are energizable to emit optical energy at different wavelengths, one of the wavelengths being substantially equal to the operating wavelength of the fiber under test. The optical sources are coupled to emit optical energy along a common optical axis. The transmission device also comprises a test signal generator for generating an electrical test signal that is applied to the optical sources for causing the optical sources to emit optical test signals, and a source control for enabling the sources selectively.

## MULTIPLE WAVELENGTH OPTICAL FIBER MEASUREMENT SYSTEM

This invention relates to a multiple wavelength optical fiber measurement system.

Background of the Invention

The propagation characteristics of an optical fiber are generally measured by launching optical energy into the fiber at an input end and examining the characteristics of the optical energy transmitted by the fiber and from an output end of the fiber and/or examining the characteristics of energy reflected back out of the fiber by way of the input end of the fiber. The propagation characteristics of the optical fiber are heavily wavelength-dependent, and therefore in order to provide useful measurement results it is necessary that the wavelength of the optical energy that is launched into the fiber should match the operating wavelength for which the fiber is designed. No single standard for the operating wavelength of optical fibers has yet emerged, and therefore in order to test a variety of optical fibers it is necessary to generate optical energy at different wavelengths. Most optical fibers that are used at present are designed to operate at a 825 nm, but there is increasing use of fibers that are operate at 1300 nm and 1550 nm. Instruments that are currently in use are only able to accommodate one optical source at a time, and in order to test a fiber having a different operating wavelength from the wavelength of the source that is at present installed in the instrument it is necessary to disconnect the source from the instrument's optical connector and remove the source from the instrument, and install a source having an appropriate operating wavelength in the instrument and connect it to the instrument's connector. However, this implies that each optical source should have its own optical connector.

Summary of the Invention

In a preferred embodiment of the present invention, apparatus for testing the propagation characteristics of an optical fiber having a given operating wavelength comprises a transmission device having at least first and second narrow-band optical sources that are energizable to emit optical energy at first and second wavelengths respectively, the first wavelength being substantially equal to the operating wavelength of the fiber. The optical energy emitted by all of the sources is directed along a common optical axis, for coupling into an optical fiber under test. A test signal generator generates an excitation signal for the optical sources to cause the optical sources to emit optical test signals, and a source control enables the sources selectively and generates identification signals representative of the selected sources.

The apparatus is used in conjunction with an optical receiver. The apparatus may be part of a single-end test instrument, such as a reflectometer, in which case the optical receiver is coupled to the fiber to receive optical energy emitted from its input end, or it may be used as one part of a two-end instrument, in which case the optical receiver is coupled to the fiber to receive energy emitted from its opposite end. In either event, the optical receiver receives optical energy emit ted from the fiber and converts the optical energy into an electrical signal, and is able to discriminate between the identification codes associated with the sources respectively.

Brief Description of the Drawings

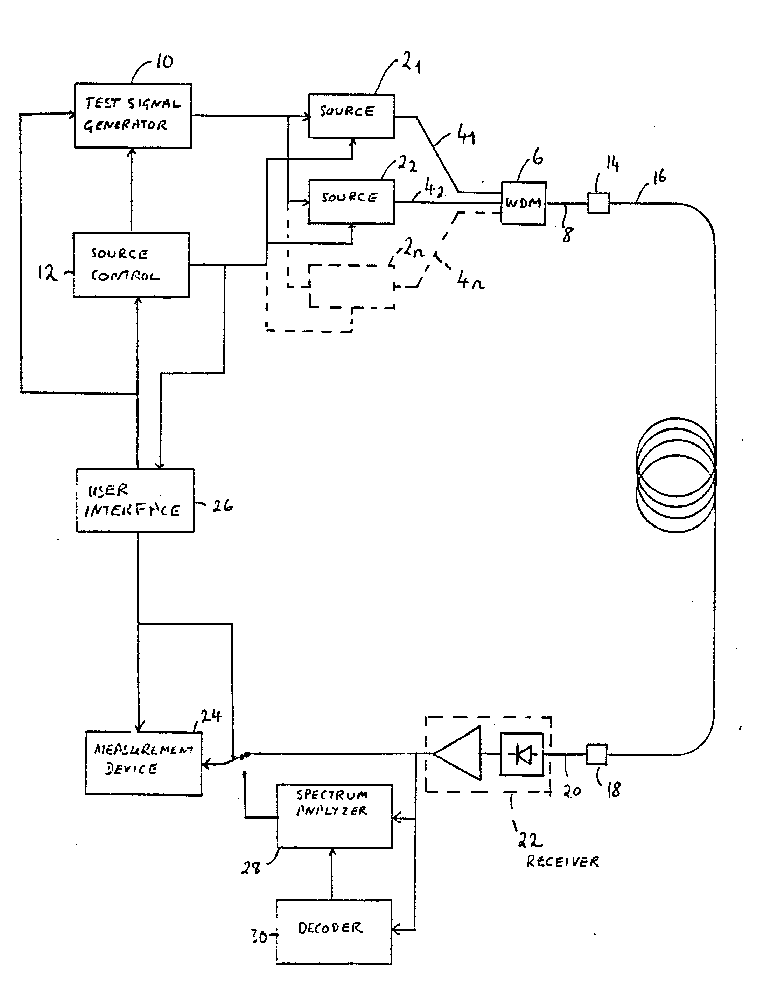

For a better understanding of the invention, and to show how the same may be carried into effect, reference will now be made; by way of example, to the accompanying drawing, the single figure of which is a block diagram of a multiple wavelength optical fiber measurement system.

Detailed Description

The measurement system shown in the drawing comprises a source assembly and a receiver assembly. The source assembly comprises a plurality of optical sources $2_1$, $2_2$, . . . $2_n$ which are optically coupled by way of respective optical fibers $4_1$, $4_2$, . . . $4_n$ to a wavelength division multiplexer 6. Each source 2 comprises a laser diode having a well-defined operating wavelength. The fibers 4 similarly are dimensioned to propagate optical energy at the operating wavelengths of the associated LEDs. The wavelength division multiplexer 6 is a commercially available device such as is sold by American Photonics under No. WC 4220 for receiving optical energy from the laser diodes by way of the fibers 4 and emitting it along a common output fiber 8. The sources 2 are all connected to a test signal generator 10, which applies electrical test signals to all of the sources, and to a source control 12 which selectively enables the optical sources. Thus, when a given optical source is enabled by the source control 12, it is excited by the electrical test signal received from the test signal generator 10 and generates a corresponding optical test signal which is coupled by way of the associated fiber 4 and the wavelength division multiplexer 6 into the output fiber 8. The source control also includes a circuit for generating an identification code that indicates the operating wavelength of the selected source.

The optical test signal that is transmitted by the multiplexer 6 into the fiber 8 is coupled by way of a connector 14 into one end of an optical fiber under test 16. The fiber 16 is coupled by way of a connector 18 at its opposite end and a fiber 20 to an optical receiver 22. The optical receiver includes a diode detector and an amplifier that generates an electrical signal having a voltage waveform that varies in accordance with the intensity of the optical energy received by the receiver 22. The electrical signal is applied to a measurement device 24 which includes a cathode ray tube (CRT) for displaying a waveform representative of the result of the test that is performed.

The illustrated system has two distinct modes of operation, namely a pulse mode and a CW burst mode. The operating mode is selected at a user interface 26. Although shown as a single block in the drawing, the user interface would in fact be in two parts, having one part at each end of the fiber 16 and the two parts being connected externally of the fiber.

In the pulse mode, the operating wavelengths of the sources 2 are chosen to correspond to the center wavelengths of the optical fibers that are conventionally used, i. e. 825 nm, 1300 nm and 1550 nm, or they may be chosen to correspond to the wavelengths at which different channels of information are transmitted in wavelength division multiplexed relationship, e. g. 1275 nm, 1300 nm and 1325 nm in the case of a fiber having a 1300 nm center wavelength. The electrical test signal generated by the test signal generator comprises a sequence of d. c. pulses of short duration. e. g. about 1 µs, separated by relatively long intervals, e. g. about 600 µs. By activating a front panel control of the user interface 26, the user causes the source control 12 to receive a signal indicating which source is to be energized, and the source control enables the appropriate source. The source selected by the source control therefore generates a succession of brief light pulses of constant amplitude, separated by longer intervals. The identification code generated by the source control is applied to the user interface and causes an indication to be given at the distal end of the fiber 16 as to the operating wavelength of the selected source. This is necessary because the fiber may have a sufficient bandwidth to transmit energy emitted by two or more of the optical sources without significant difference in performance, and therefore the wavelength that is transmitted cannot be inferred simply from the operating wavelength of the fiber under test. For example, whereas it might be a simple matter to distinguish the measurement outputs provided by the measurement device for sources operating at 825 nm, 1300 nm and 1550 nm, the difference in performance of a fiber having a center wavelength of 1300 nm at 1275 nm, 1300 nm and 1325 nm, might not be such as to enable an inference to be readily drawn concerning the features of the propagation characteristic that are attributable to the different operating wavelengths. The pulse mode of operation is used for measuring transmission loss in the fiber under test, and in this case the measurement device 24 provides an indication of the amplitude of the light pulses received by the receiver 22.

The CW burst mode of operation is used for measuring dispersion (change in propagation velocity as a function of the wavelength of the propagating energy and of the modulating frequency). Dispersion has to be taken account of when a fiber is used to transmit several channels of information in wavelength division multiplexed relationship, since it limits the quantity of information that can be transmitted. The operating wavelengths of the sources 2 are selected to correspond to the wavelengths at which the different channels are transmitted, e. g. 1275 nm, 1300 nm and 1325 nm in the case of a fiber having a 1300 nm center wavelength.

In the CW burst mode, the electrical test signal comprises a sequence of brief bursts at different frequencies, e. g. 500 MHz, 550 MHz, 600 MHz etc., and the selected source generates a succession of pulses that are amplitude modulated in accordance with the burst frequencies. In order to measure dispersion, the optical receiver 22 is connected to a spectrum analyzer.module 28 for analyzing the frequency composition of the electrical signal generated by the diode detector. In addition, in the CW burst mode the source control enables the sources 2 sequentially, i. e. the source $2_1$ is energized with the sequence of bursts, then the source $2_2$ is energized with the same sequence of bursts, etc., and the identification code generated by the source control identifies not only the operating wavelength of the source 2 but also the frequency of the burst. The identification code is not applied to the user interface but is used to modulate the selected optical source prior to transmission of a burst, and the optical receiver is connected to a decoder module 30 for extracting the coded information from the electrical output of the diode detector and making it available to the spectrum analyzer module. Therefore the spectrum analyzer module is able to correlate the amplitude of the electrical signal provided by the diode detector with the propagation wavelength of the optical energy and the frequency of the modulating wave and thus enable the measurement device to provide a display of amplitude of optical energy received by the receiver as a function of both propagation wavelength and modulating frequency.

The present invention is not restricted to the particular system that has been described and illustrated, and variations may be made therein without departing from the scope of the invention as defined in the appended claims, and equivalents thereof. For example, although the invention has been described in connection with a two-ended measurement (in which the receiver is coupled to the fiber at the distal end thereof), the invention is also applicable to a reflectometer system, in which the receiver is coupled to the fiber through a directional coupler at the proximal end of the fiber. In the event that the apparatus is a part of a reflectometer, it would be used in the pulse mode rather than the CW burst mode. Clearly, in the case of the apparatus' being part of a reflectometer the user interface would not be in two separate parts, and it would not be necessary to provide an identification code from the source control to the user interface because there would be no need for the information concerning the operating wavelength of the selected source to be made available at a remote location. When the measurement system is used in the pulse mode to carry out a two-ended measurement, the identification signal need not be transmitted to the user interface externally of the fiber 16, but it could be transmitted over the fiber 16, as in the CW burst mode, and made available to the user interface by the decoder 30.

## Claims

1. Apparatus for testing a propagation characteristic of an optical fiber having a given operating wavelength, comprising a transmission device having at least first and second narrow-band optical sources that are energizable to emit optical energy at first and second wavelengths respectively, said first wavelength being substantially equal to said given operating wavelength, means for receiving optical energy emitted by said sources and directing the optical energy received from all of said sources along a common optical axis, means for generating an excitation signal for said optical sources to cause said optical sources to emit optical test signals, and means for enabling said sources selectively.

2. Apparatus according to claim 1, wherein the means for receiving optical energy emitted by said sources comprise a wavelength division multiplexer having at least first and second input ports that are optically coupled to said first and second optical sources respectively and an output port for coupling to the fiber under test.

3. Apparatus according to claim 1, in combination with a receiver device for receiving optical energy emitted from the optical fiber under test in response to optical energy launched into the fiber under test by the transmission device.

4. Apparatus according to claim 3, wherein said receiver device comprises a wideband opto-electrical transducer for generating an electrical signal representative of the variation in optical energy emitted by the fiber under test, and a measurement device for processing the electrical signal to provide a measurement result.

5. Apparatus according to claim 1, wherein the means for enabling the sources selectively are also operative to generate identification signals representative of the selected source.

6. Apparatus according to claim 5, in combination with a receiver device for receiving optical energy emitted from the optical fiber under test in response to optical energy launched into the fiber under test by the transmission device, and wherein the means for enabling the sources selectively are operative to cause the selected source to emit an optical signal that carries the identification signal representative of that source, and the receiver device includes means for decoding the identification signal from the optical energy received by the receiver device.